# EUROPEAN PATENT APPLICATION

(11) **EP 1 081 334 A1**
(43) Date of publication of application: **07.03.2001**
(21) Application number: 00304874.1
(22) Date of filing: 08.06.2000
(51) Int. Cl.: F01D 5/18, F01D 5/14

(54) **Turbine airfoil or vane having movable nozzle ribs**

(30) Priority: 11.08.1999 US 372190
(71) Applicant: GENERAL ELECTRIC COMPANY, Schenectady, NY 12345 (US)
(72) Inventor: Yu, Yufeng Phillip, Greenville, South Carolina 29615 (US); Itzel, Gary Michael, Greenville, South Carolina 29680 (US)
(74) Representative: Pedder, James Cuthbert

(57) **Abstract**

A nozzle vane or airfoil structure (10) is provided in which the nozzle ribs (12) are connected to the side walls of the vane or airfoil in such a way that the ribs (12) provide the requisite mechanical support between the concave side (16) and convex side (14) of the airfoil but are not locked in the radial direction of the assembly, longitudinally of the airfoil. The ribs (12) may be bi-cast onto a preformed airfoil side wall structure or fastened to the airfoil by an interlocking slide connection and/or welding. By attaching the nozzle ribs (12) to the nozzle airfoil metal in such a way that allows play longitudinally of the airfoil, the temperature difference induced radial thermal stresses at the nozzle airfoil/rib joint area are reduced while maintaining proper mechanical support of the nozzle side walls.

## Description

This invention relates to nozzle airfoil design, and more particularly, to an improved airfoil to airfoil rib joint for reducing thermal stresses at that junction.

Gas turbines typically include a compressor section, a combustor and a turbine section. The compressor section draws in ambient air and compresses it. Fuel is added to the compressed air in the combustor and the air fuel mixture is ignited. The resultant hot fluid enters the turbine section where energy is extracted by turbine blades, which are mounted to a rotatable shaft. The rotating shaft drives the compressor in the compressor section and drives, e.g., a generator for generating electricity or is used for other functions. The efficiency of energy transfer from the hot fluid to the turbine blades is improved by controlling the angle of the path of the gas onto the turbine blades using non-rotating, airfoil shaped vanes or nozzles. These airfoils direct the flow of hot gas or fluid from a nearly parallel flow to a generally circumferential flow onto the blades. Since the hot fluid is at very high temperature when it comes into contact with the airfoil, the airfoil is necessarily subject to high temperatures for long periods of time. Thus, in conventional gas turbines, the airfoils are generally internally cooled, for example by directing a coolant, which is compressed air in some systems and/or nozzle stages and steam in others, through internal cooling cavities in the airfoil.

Inside the airfoil, ribs are conventionally provided to extend between the convex and concave sides of the airfoil to provide mechanical support between the concave and convex sides of the airfoil. The ribs are needed to maintain the integrity the nozzle and reduce ballooning stress of the cavities. The ribs concurrently define at least part of the coolant flow path(s) through the airfoil. Thus, during engine operation, the internal ribs will be at a temperature level close to that of the coolant flowing through the airfoil, while the peripheral airfoil metal will generally be at a much higher temperature level. The mismatched temperatures result in high thermal stresses at the junctures of the ribs and the airfoil side walls. This high stress level combined with the high operating temperature results in fast deterioration of the vane at that area and thus deteriorated component life.

According to a first aspect of the invention a turbine vane, comprises an outer peripheral wall defining a hollow interior space and extending longitudinally in a first direction and at least one internal baffle wall disposed in said hollow interior space, said at least one baffle wall extending longitudinally generally in said first direction, and being coupled to and extending in a second direction, generally transverse to said first direction, between opposing inner portions of said peripheral wall so as to provide mechanical support to said peripheral wall, said at least one baffle wall being structurally distinct from but mechanically coupled to said inner portions of said peripheral wall so as to be substantially transversely locked to said peripheral wall thereby to substantially prevent relative movement between said at least one baffle wall and said peripheral wall in said second direction.

Preferably, the baffle wall is connected to said peripheral wall so as to allow at least some relative movement in the longitudinal direction thereof thereby to minimize thermal stresses in said first direction.

The inner portions of said peripheral wall and longitudinal side edges of said baffle wall may include complimentary interlocking coupling structures shaped to allow relative longitudinal displacement and substantially prevent movement in a direction transverse thereto. The complimentary interlocking coupling structures may comprise complementarily shaped projections and grooves.

A dovetail receptacle may be defined on and/or in each said inner portion for receiving a complimentary dovetail bulbous portion of said baffle wall longitudinal side edge.

The inner portions of said peripheral wall may define a coupling structure comprising at least one of a longitudinal groove and a longitudinal projection and said baffle wall is cast thereto so as to define a complementary coupling structure.

The baffle wall may be formed from a material having a lesser melting point than a material of said peripheral wall. The baffle wall may be formed independently from said peripheral wall and may be coupled to said inner portions thereof by slidably displacing the baffle wall relative to the peripheral wall to interconnect said complimentary coupling structures thereof. The baffle wall may be welded to said inner portions.

According to a second aspect of the invention a turbine airfoil comprises an outer peripheral wall including a generally concave side wall and a generally convex side wall defining therebetween a hollow interior space and a plurality of baffle walls extending between said convex side wall and said concave side wall so as to mechanically support said side walls and so as to divide said hollow interior space into a plurality of cooling passages for coolant flow; each said baffle wall extending longitudinally in a first direction generally parallel to a longitudinal axis of said outer peripheral wall, and extending between said side walls in a second direction generally transverse to said longitudinal axis of said outer wall, at least one of said baffle walls being structurally distinct from but mechanically coupled to said side walls so as to be substantially transversely locked to said convex and concave side walls to substantially prevent relative movement between said baffle wall and said convex and concave side walls in said second direction.

Preferably, the at least one baffle wall is connected to said side walls so as to allow at least some relative movement in the longitudinal direction thereof thereby to minimize thermal stresses in said first direction.

Longitudinal side edges of said one baffle wall and said side walls may include respective complimentary interlocking coupling structures shaped to allow relative longitudinal displacement and substantially to prevent movement in said second direction. The complimentary interlocking coupling structures may comprise complementarily shaped projections and grooves.

A dovetail receptacle may be defined on and/or in each said side wall for receiving a respective complimentary dovetail bulbous portion of a respective longitudinal side edge of said baffle wall.

The side walls may each include a coupling structure comprising at least one of a longitudinal groove and a longitudinal projection and said at least one baffle wall may be cast thereto so as to define a complementary coupling structure.

The at least one baffle wall may be formed from a material having a lesser melting point than a material of said side walls. The at least one baffle wall may be formed independently from said side walls and may be coupled thereto by slidably displacing the baffle wall relative to the side walls to interconnect said complimentary coupling structures thereof. The baffle wall is welded to said side walls.

Thus the invention is embodied in a vane or nozzle airfoil structure in which one or more of the nozzle ribs are connected to the airfoil side walls in such a way that the ribs provide the requisite mechanical support between the concave side and convex side of the airfoil but are not locked in the radial direction of the vane or nozzle assembly, longitudinally of the vane or airfoil. This configuration minimizes the stress caused by the mismatch of the material temperature between the airfoil outer, side walls and the support ribs.

The mechanical support ribs may be bi-cast onto a preformed nozzle airfoil side wall structure or fastened to the airfoil by an interlocking slide connection and/or welding. This substantially independent formation and mechanical interconnection enables some play in the radial direction of the nozzle assembly, longitudinally of the airfoil. By attaching the nozzle ribs to the nozzle airfoil metal in such a way that allows play longitudinally of the airfoil, the temperature difference induced radial thermal stresses at the nozzle airfoil/rib joint area are reduced while maintaining proper mechanical support of the nozzle side walls.

The invention will now be described in greater detail, by way of example, with reference to the drawings, in which:-
FIGURE 1 is a schematic cross-sectional view of an airfoil showing the internal rib or baffle connection between the airfoil convex side and the airfoil concave side;
FIGURE 2 is a schematic elevational view of a nozzle airfoil;
FIGURE 3 is a perspective view showing the typical disposition of ribs in a nozzle airfoil;
FIGURE 4 is a schematic view of detail IV in FIGURE 1 showing a conventional airfoil to airfoil rib joint; and
FIGURE 5 is a schematic view of detail IV in FIGURE 1 showing an airfoil to airfoil rib joint provided in accordance with an exemplary embodiment of the invention.

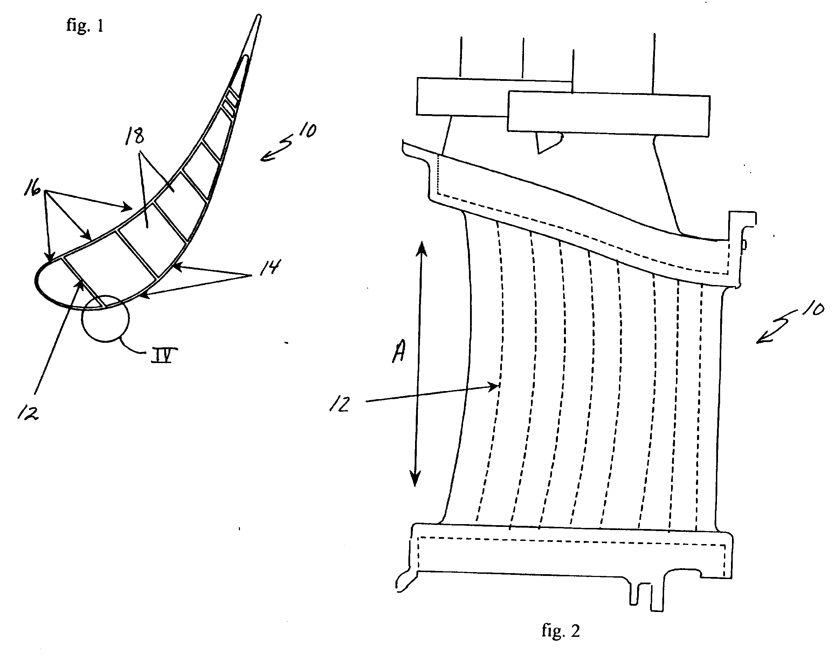

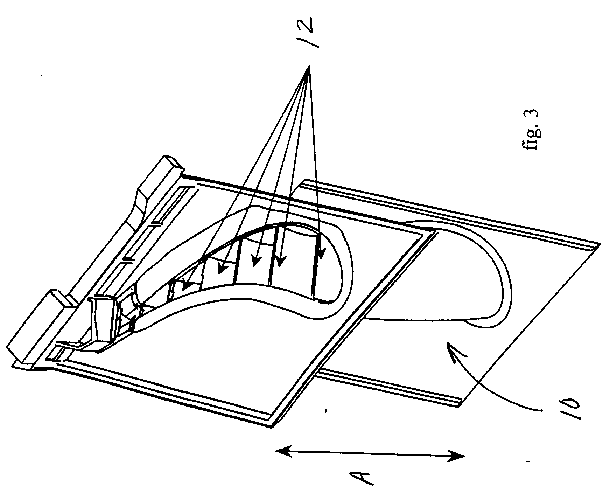

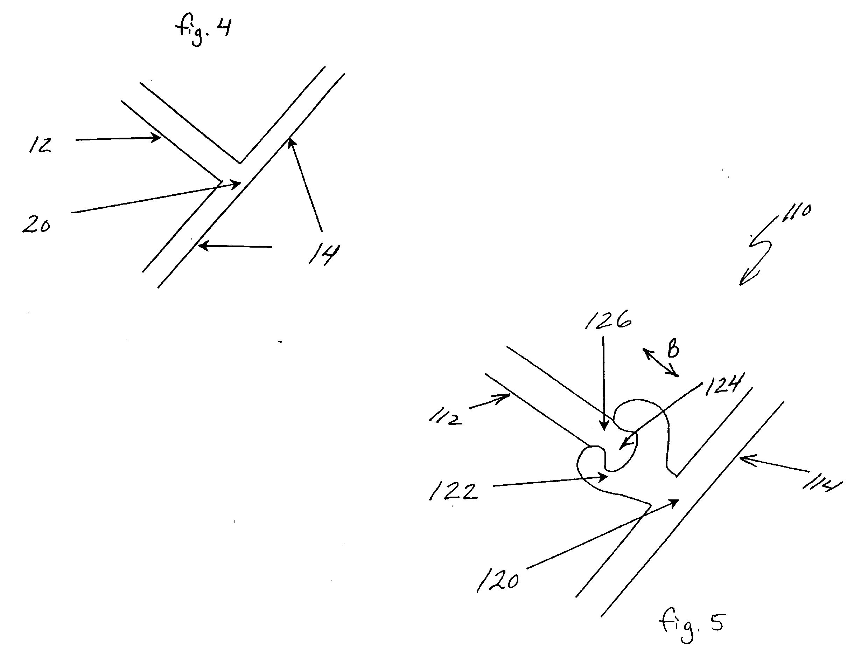

A conventional nozzle airfoil 10 having a series of ribs or baffles 12 extending between convex 14 and concave 16 sides thereof is shown by way of example in FIGURES 1-3. Typically, cooling air or steam enters one end of the airfoil and passes in a radial direction, longitudinally of the airfoil, along a serpentine path through the passages 18 defined between the respective mechanical support ribs or baffles 12. Conventionally, the airfoil walls 14, 16 and ribs or baffles 12 are cast as a single vane section or unit. Thus, as shown for example in FIGURE 4, the airfoil walls and the airfoil ribs 12 are conventionally integrally formed in one piece from a common material.

As noted above, during engine operation, the ribs 12 are at a temperature level close to that of the coolant flowing through passages 18, whereas the airfoil walls 14, 16 are at a much higher temperature level. This mismatch in temperatures causes high thermal stress in the area of the joints 20 between the ribs 12 and the airfoil walls 14, 16. The high stress level combined with the high operating temperature reduces nozzle life at that area.

In accordance with an exemplary embodiment of the invention stress is reduced at the joints 120 of the nozzle ribs 112 and the nozzle side wall 114. More specifically, rather than integrally cast with the nozzle airfoil wall, the nozzle ribs 112 are connected to the nozzle airfoil wall 114 in such a way that the ribs 112 provide the requisite mechanical support between the convex 114 and concave (not shown) sides of the nozzle airfoil, and define at least a part of the coolant flow path(s) as in the conventional structure, but they are not locked in a radial direction of the nozzle section 114 (longitudinally of the respective airfoil). Such a connection, which is locked in a direction B transverse to the longitudinal extent of the airfoil, but which allows play longitudinally of the airfoil reduces the stresses caused by the temperature mismatch between the airfoil wall 114 and the ribs 112.

An exemplary coupling of the airfoil rib to the airfoil outer wall is schematically shown in FIGURE 5. In the illustrated embodiment, a dovetail groove or receptacle 122 is defined on the interior of the airfoil outer (side) wall 114. A complimentary dovetail feature 124 is defined on the longitudinal side edge 126 of the rib 112 for locking engagement with the dovetail receptacle 122 of the airfoil wall 114, so as to substantially preclude relative movement of the rib 112 and the airfoil wall 114 in direction B, transverse to the longitudinal extent of the rib. However, relative movement between the rib 112 and the wall 114 is allowed, longitudinally of the joint 120. Thus, the nozzle ribs 112 are connected to the nozzle airfoil section in such a way that the ribs provide mechanical support between the concave and convex sides of the nozzle airfoil 110 but they are not locked in a radial direction.

To couple the ribs 112 to the airfoil side wall 114, the ribs 112 may be bi-cast on the nozzle airfoil wall 114. In this case, the airfoil is cast or machined with a sliding connection feature such as a dovetail receptacle, as shown, at the designated locations for rib attachment. A tower melting point alloy is then used to form the ribs, by casting onto the dovetail features of the airfoil. Because the ribs 112 and airfoil wall 114 are not integrally formed, the requisite play for reducing thermal stress at the joint 120 is possible.

As an alternative, the dovetail feature(s) 112 may be cast with or into the airfoil. Suitably cast or machined ribs may be then be slid into or onto the respective dovetail features to engage the complimentary connector structures of the ribs and airfoil walls respectively. The ribs may be welded to the airfoil outer wall e.g. at spaced locations along joint 120, if necessary or desirable to retain the ribs in position in the nozzle wall while still allowing for sufficient play to reduce thermal stresses.

While in the illustrated embodiment, the airfoil outer wall is illustrated as formed with a dovetail receptacle for receiving a suitable bulbous or dovetail portion on the rib, it is to be understood that the coupling configuration may be altered or reversed such that the dovetail or bulbous portion is defined on the airfoil outer wall and the receptacle therefor defined along the longitudinal side edges of the respective rib. Moreover, while in the illustrated embodiment the complementary coupling structures have been illustrated and described as dove-tail type configurations, it is to be understood that any of a variety of complementary coupling structures which allow for relative longitudinal sliding movement but limit or preclude play in a direction transverse thereto could be provided to interconnect the nozzle rib to the nozzle outer wall without departing from the invention disclosed herein.

## Claims

1. A turbine vane, comprising:
an outer peripheral wall defining a hollow interior space and extending longitudinally in a first direction;
at least one internal baffle wall disposed in said hollow interior space, said at least one baffle wall extending longitudinally generally in said first direction, and being coupled to and extending in a second direction, generally transverse to said first direction, between opposing inner portions of said peripheral wall so as to provide mechanical support to said peripheral wall, said at least one baffle wall being structurally distinct from but mechanically coupled to said inner portions of said peripheral wall so as to be substantially transversely locked to said peripheral wall thereby to substantially prevent relative movement between said at least one baffle wall and said peripheral wall in said second direction.

2. A turbine vane as in claim 1, wherein said baffle wall is connected to said peripheral wall so as to allow at least some relative movement in the longitudinal direction thereof thereby to minimize thermal stresses in said first direction.

3. A turbine vane as in claim 2, wherein said inner portions of said peripheral wall and longitudinal side edges of said baffle wall include complimentary interlocking coupling structures shaped to allow relative longitudinal displacement and substantially prevent movement in a direction transverse thereto.

4. A turbine vane as in claim 3, wherein said complimentary interlocking coupling structures comprise complementarily shaped projections and grooves.

5. A turbine vane as in claim 4, wherein a dovetail receptacle is defined one of on and in each said inner portion for receiving a complimentary dovetail bulbous portion of said baffle wall longitudinal side edge.

6. A turbine airfoil, comprising:
an outer peripheral wall including a generally concave side wall and a generally convex side wall defining therebetween a hollow interior space;
a plurality of baffle walls extending between said convex side wall and said concave side wall so as to mechanically support said side walls and so as to divide said hollow interior space into a plurality of cooling passages for coolant flow; each said baffle wall extending longitudinally in a first direction generally parallel to a longitudinal axis of said outer peripheral wall, and extending between said side walls in a second direction generally transverse to said longitudinal axis of said outer wall, at least one of said baffle walls being structurally distinct from but mechanically coupled to said side walls so as to be substantially transversely locked to said convex and concave side walls to substantially prevent relative movement between said baffle wall and said convex and concave side walls in said second direction.

7. A turbine airfoil as in claim 6, wherein said at least one baffle wall is connected to said side walls so as to allow at least some relative movement in the longitudinal direction thereof thereby to minimize thermal stresses in said first direction.

8. A turbine airfoil as in claim 7, wherein longitudinal side edges of said one baffle wall and said side walls include respective complimentary interlocking coupling structures shaped to allow relative longitudinal displacement and to substantially prevent movement in said second direction.

9. A turbine airfoil as in claim 8, wherein said complimentary interlocking coupling structures comprise complementarily shaped projections and grooves.

10. A turbine airfoil as in claim 9, wherein a dovetail receptacle is defined one of on and in each said side wall for receiving a respective complimentary dovetail bulbous portion of a respective longitudinal side edge of said baffle wall.
